# EUROPEAN PATENT SPECIFICATION

(11) **EP 3 995 720 B1**
(45) Date of publication and mention of the grant of the patent: **18.10.2023**
(21) Application number: 20934884.6
(22) Date of filing: 04.12.2020
(51) Int. Cl.: F16H 3/093

(54) **MODULAR-DESIGN GEARBOX AND GEAR IMPLEMENTATION METHOD**
GETRIEBE MIT MODULAREM AUFBAU UND VERFAHREN ZUM GANGEINSATZ
BOÎTE DE VITESSES DE CONCEPTION MODULAIRE ET PROCÉDÉ DE MISE EN OEUVRE DE VITESSES

(30) Priority: 14.05.2020 CN 202010405157
(43) Date of publication of application: 11.05.2022
(73) Proprietor: Jiangsu Advanced Construction Machinery Innovation Center Ltd., Xuzhou, Jiangsu 221004 (CN); Jiangsu XCMG Construction Machinery Research Institute Ltd., Xuzhou, Jiangsu 221004 (CN)
(72) Inventor: ZHAN, Dongan, Xuzhou, Jiangsu 221004 (CN); LV, Chang, Xuzhou, Jiangsu 221004 (CN); YAN, Weipeng, Xuzhou, Jiangsu 221004 (CN); SHI, Guoguo, Xuzhou, Jiangsu 221004 (CN); ZHANG, Gang, Xuzhou, Jiangsu 221004 (CN)
(74) Representative: Proi World Intellectual Property GmbH
(86) International application number: PCT/CN2020/133744
(87) International publication number: WO 2021/227456

(56) References cited:
- CN-A- 101 240 832
- CN-A- 102 003 501
- CN-A- 104 373 526
- CN-A- 106 369 133
- CN-A- 111 609 096
- JP-A- 2014 098 410

## Description

### TECHNICAL FIELD

The present invention relates to the technical field of gearboxes, and in particular, to a modular design gearbox and a gear implementation method.

### BACKGROUND

There are many types of main engine products for engineering machinery and the demand for a single type of main engine product is relatively low. It is not realistic to design and develop gearboxes for various main engines. This requires that the gearboxes applied to the construction machinery can cover a variety of products with similar power ranges. In addition, the working conditions of the main engine products for construction machinery are complex, and the requirements for the number of gears and transmission ratios are also different, and thus the requirements for the flexibility of the number of gears and transmission ratios of the construction machinery gearbox and the universality of parts are higher.

For a main engine of multi-gear requirements, a customer has increasingly higher requirements for product smoothness, which requires the gearbox to have more gears and a larger speed ratio range. Taking a motor grader as an example, a transmission currently applied to the motor grader is mainly a fixed-shaft gearbox of six forward gears and three backward gears based on the ZF technical solution, and a speed ratio of a first forward gear is about 5.2. In recent years, with the increasing requirements of a user of the motor grader for the smoothness experience of the main engine, the motor grader requires the first forward gear of the gearbox to provide a larger speed ratio (about 7.5), to reduce the sensitivity of the main engine to an external load during operation, thereby improving the operation smoothness. In addition, it is also necessary to increase the number of gears of the gearbox, especially the number of forward gears (increased to eight gears), to reduce the impact of shifting and improve the smoothness of shifting.

For some main engines such as loaders, a loader only carries out a shovel loading cycle of repeatedly shifting a second forward gear, a first forward gear and a second backward gear in a smaller area. Too many gears may lead to tedious work and lower efficiency. The demand for fewer gears is put forward for the gearbox. If coupling of some clutches is suppressed by a multi-gear gearbox to achieve fewer gears, the actual number of parts is not reduced, which causes unnecessary waste. However, redesigning and developing a new structure of a less-gear gearbox not only increases the design cost, but it is also difficult to ensure the universality to original multi-gear gearbox components, resulting in an increase in production costs.

On the other hand, gearboxes in the field of construction machinery are divided into planetary gearboxes and fixed-shaft gearboxes according to the form of gear trains. The planetary gearbox has a compact structure and requires less space, but has a complex structure, higher accuracy requirements, fewer gears, short service life and higher failure rate, while the fixed-shaft gearbox has a simple structure design and is easy to achieve variable gears, gear ratios, strong adaptability, convenient manufacturing and maintenance, and can meet the requirements for flexibility and modularity of construction machinery gearboxes, which is the development trend of the high-end market of construction machinery in the future.

At present, the fixed-shaft gearboxes applied in the construction machinery industry can be divided into two types according to the arrangement of clutches on shafts. One is to arrange two clutch packs on a shaft. The most widely used in the market is the WG-series transmission structure solution from the German ZF company, such as the solution as mentioned in patent CN202392055U. The other is to arrange only one clutch pack on a shaft. The structure solution is as mentioned in patent CN100491768C. The two technical solutions can achieve up to six forward gears and three backward gears, and the speed ratio range is between 0.6 and 6.

CN104373526A discloses a modular design gearbox that comprises a body; a drive shaft, provided thereon with a first floating gear installed through a first clutch, and a second floating gear installed through a second clutch; a first intermediate shaft, provided thereon with a second fixed gear, the second fixed gear being engaged with the second floating gear; an second intermediate shaft, provided thereon with a fourth fixed gear and a fifth fixed gear, the fourth fixed gear being engaged with the first floating gear, and the fourth fixed gear being engaged with the second fixed gear; an third intermediate shaft, provided thereon with a sixth fixed gear, a fourth floating gear installed through a fourth clutch, and a fifth floating gear installed through a fifth clutch, the fourth floating gear being engaged with the fourth fixed gear, and the fifth floating gear being engaged with the fifth fixed gear; an fourth intermediate shaft, provided thereon with a seventh fixed gear, a sixth floating gear installed through a sixth clutch, and a seventh floating gear installed through a seventh clutch, the sixth floating gear being engaged with the fourth fixed gear, and the seventh floating gear being engaged with the fifth fixed gear; and an output shaft, provided thereon with a eighth fixed gear and a ninth fixed gear, the eighth fixed gear being engaged with the sixth fixed gear, and the ninth fixed gear being engaged with the seventh fixed gear. In a forward gear mode, rotation directions of the drive shaft, the second intermediate shaft, and the output shaft are the same, and are opposite to rotation directions of the first intermediate shaft, the third intermediate shaft, and the fourth intermediate shaft; and in a backward gear mode, the rotation directions of the drive shaft, the third intermediate shaft, and the fourth intermediate shaft are the same, and are opposite to the rotation directions of the second intermediate shaft and the output shaft, and the first intermediate shaft does not participate in transmission.

The method is used for implementing a multi-gear mode, wherein the mode comprises a four-forward-gear/four-backward-gear mode. A first forward path, first, second, third, and fourth output paths, a backward path, one, first, third, fifth, and seventh forward gears, and first to fourth backward gears are arranged.

### SUMMARY

To address the shortcomings of existing technologies, the present invention provides a modular design gearbox according to claim 1. By means of six shafts and seven clutches, the gearbox achieves a mode of up to eight forward gears and four backward gears, a speed ratio range is wide, and the gearbox can be adjusted flexibly, a less-gear mode can be achieved by reducing some of components, modularization is achieved, universality is improved, and the production cost and use cost of the gearbox are reduced.

The technical solution of the present invention has the following beneficial effects: the modular design gearbox of the present invention adopt the form of two clutches on a single shaft. By means of six shafts and seven clutches, the gearbox achieves a mode of up to eight forward gears and four backward gears, a speed ratio range is wide, and the gearbox can be adjusted flexibly, a less-gear mode can be achieved by reducing some of components, modularization is achieved, universality is improved, and the production cost and use cost of the gearbox are reduced. Moreover, each forward gear is achieved by coupling two clutches and conducting gear engagement four times, each backward gear is achieved by coupling two clutches and conducting gear engagement three times, the transmission path is short, and the reliability is high.

### BRIEF DESCRIPTION OF THE DRAWINGS

FIG. 1 is a schematic diagram of transmission in an eight-forward-gear/four-backward-gear mode of a modular design gearbox of the present invention;
FIG. 2 is a topological diagram of an end face of the structure in FIG. 1;

### DETAILED DESCRIPTION

Exemplary embodiments of the present invention are described below with reference to the accompanying drawings, including various details of the embodiments of the present invention to facilitate understanding, which should be regarded as merely exemplary.

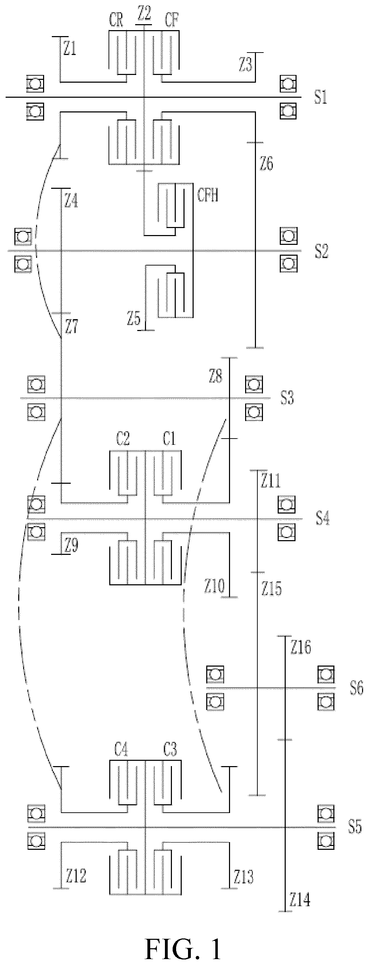

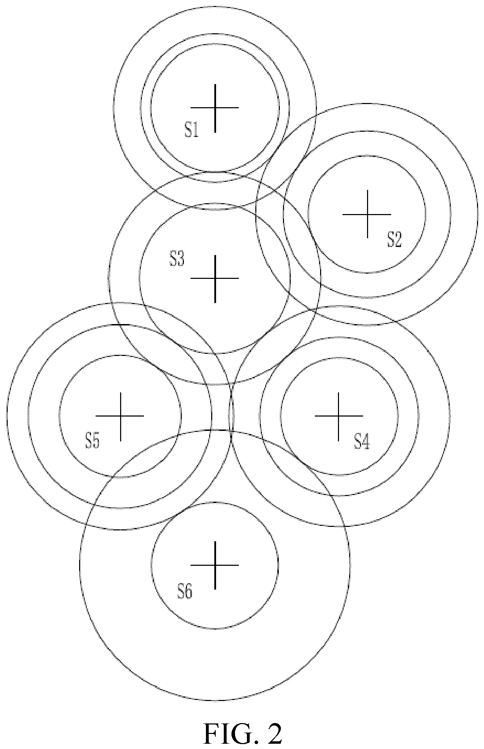

Referring to FIG. 1 and FIG. 2, a modular design gearbox includes a body, and further includes a drive shaft S1, an first intermediate shaft S2, an second intermediate shaft S3, an third intermediate shaft S4, an fourth intermediate shaft S5, and an output shaft S6. The drive shaft S1 is provided thereon with a first fixed gear Z2, a first floating gear Z1 installed through a first clutch CR, and a second floating gear Z3 installed through a second clutch CF. The first intermediate shaft S2 is provided thereon with a second fixed gear Z4, a third fixed gear Z6, and a third floating gear Z5 installed through a third clutch CFH. The third fixed gear Z6 is engaged with the second floating gear Z3, and the third floating gear Z5 is engaged with the first fixed gear Z2. The second intermediate shaft S3 is provided thereon with a fourth fixed gear Z7 and a fifth fixed gear 28. The fourth fixed gear Z7 is engaged with the first floating gear Z1, and the fourth fixed gear Z7 is engaged with the second fixed gear Z4. The third intermediate shaft S4) is provided thereon with a sixth fixed gear Z11, a fourth floating gear Z9 installed through a fourth clutch C2, and a fifth floating gear Z10 installed through a fifth clutch C1. The fourth floating gear Z9 is engaged with the fourth fixed gear Z7, and the fifth floating gear Z10 is engaged with the fifth fixed gear 28. The fourth intermediate shaft S5 is provided thereon with a seventh fixed gear Z14, a sixth floating gear Z12 installed through a sixth clutch C4, and a seventh floating gear Z13 installed through a seventh clutch C3. The sixth floating gear Z12 is engaged with the fourth fixed gear Z7, and the seventh floating gear Z13 is engaged with the fifth fixed gear Z8). The output shaft S6) is provided thereon with a eighth fixed gear Z15 and a ninth fixed gear Z16. The eighth fixed gear Z15 is engaged with the sixth fixed gear Z11, and the ninth fixed gear Z16 is engaged with the seventh fixed gear 214. In a forward gear mode, rotation directions of the drive shaft S1, the second intermediate shaft S3, and the output shaft S6 are the same, and are opposite to rotation directions of the first intermediate shaft S2, the third intermediate shaft S4), and the fourth intermediate shaft S5. In a backward gear mode, the rotation directions of the drive shaft S1, the third intermediate shaft S4, and the fourth intermediate shaft S5 are the same, and are opposite to the rotation directions of the second intermediate shaft S3 and the output shaft S6, and the first intermediate shaft S2 does not participate in transmission.

Furthermore, a connecting line of projections of a shaft axis of the drive shaft S1, a shaft axis of the first intermediate shaft S2, and a shaft axis of the second intermediate shaft S3 in a plane perpendicular to the shaft axis of the drive shaft S1 is triangular, and a connecting line of projections of the shaft axis of the second intermediate shaft S3, a shaft axis of the third intermediate shaft S4, a shaft axis of the fourth intermediate shaft S5, and a shaft axis of the output shaft S6 in a plane perpendicular to the shaft axis of the second intermediate shaft S3 is quadrilateral.

The gear implementation method for the modular design gearbox, for implementing a multi-gear mode. The multi-gear mode includes an eight-forward-gear/four-backward-gear mode.

When the second clutch CF is in an engaged state, a first forward path is formed from the second floating gear Z3 through the third fixed gear Z6 and the second fixed gear Z4 to the fourth fixed gear Z7.

When the third clutch CFH is in an engaged state, a second forward path is formed from the first fixed gear Z2 through the third floating gear Z5 and the second fixed gear Z4 to the fourth fixed gear Z7.

When the fifth clutch C1 is in an engaged state, a first output path is formed from the fifth fixed gear Z8 through the fifth floating gear Z10 and the sixth fixed gear Z11 to the eighth fixed gear Z15.

When the fourth clutch C2 is in an engaged state, a second output path is formed from the fourth floating gear Z9 through the sixth fixed gear Z11 to the eighth fixed gear Z15.

When the seventh clutch C3 is in an engaged state, a third output path is formed from the fifth fixed gear Z8 through the seventh floating gear Z13 and the seventh fixed gear Z14 to the ninth fixed gear Z16.

When the sixth clutch C4 is in an engaged state, a fourth output path is formed from the sixth floating gear Z12 through the seventh fixed gear Z14 to the ninth fixed gear Z 16.

When the first clutch CR is in an engaged state, a backward path is formed from the first floating gear Z1 to the fourth fixed gear Z7.

In the eight-forward-gear/four-backward-gear mode,
a first forward gear: the second clutch CF and the fifth clutch C1 are in an engaged state, and the drive shaft S1 transmits power to the output shaft S6 via the first forward path and the first output path;
a second forward gear: the third clutch CFH and the fifth clutch C 1 are in an engaged state, and the drive shaft S1 transmits power to the output shaft S6 via the second forward path and the first output path;
a third forward gear: the second clutch CF and the fourth clutch C2 are in an engaged state, and the drive shaft S1 transmits power to the output shaft S6 via the first forward path and the second output path;
a fourth forward gear: the third clutch CFH and the fourth clutch C2 are in an engaged state, and the drive shaft S1 transmits power to the output shaft S6 via the second forward path and the second output path;
a fifth forward gear: the second clutch CF and the seventh clutch C3 are in an engaged state, and the drive shaft S1 transmits power to the output shaft S6 via the first forward path and the third output path;
Ia sixth forward gear: the third clutch CFH and the seventh clutch C3 are in an engaged state, and the drive shaft S1 transmits power to the output shaft S6 via the second forward path and the third output path;
a seventh forward gear: the second clutch CF and the sixth clutch C4 are in an engaged state, and the drive shaft S1 transmits power to the output shaft S6 via the first forward path and the fourth output path;
an eighth forward gear: the third clutch CFH and the sixth clutch C4 are in an engaged state, and the drive shaft S1 transmits power to the output shaft S6 via the second forward path and the fourth output path;
a first backward gear: the first clutch CR and the fifth clutch C1 are in an engaged state, and the drive shaft S1 transmits power to the output shaft S6 via the backward path and the first output path;
a second backward gear: the first clutch CR and the fourth clutch C2 are in an engaged state, and the drive shaft S1 transmits power to the output shaft S6 via the backward path and the second output path;
a third backward gear: the first clutch CR and the seventh clutch C3 are in an engaged state, and the drive shaft S1 transmits power to the output shaft S6 via the backward path and the third output path; and
a fourth backward gear: the first clutch CR and the sixth clutch C4 are in an engaged state, and the drive shaft S1 transmits power to the output shaft S6 via the backward path and the fourth output path.

### See Table 1 for the clutch coupling situations

**Table 1 Table of the clutch coupling situations at each gear in the eight-forward-gear/four-backward-gear mode**

| Gears | | Clutch coupling |
|---|---|---|
| Forward gear | 1 | Second clutch CF and fifth clutch C1 |
| | 2 | Third clutch CFH and fifth clutch C1 |
| | 3 | Second clutch CF and fourth clutch C2 |
| | 4 | Third clutch CFH and fourth clutch C2 |
| | 5 | Second clutch CF and seventh clutch C3 |
| | 6 | Third clutch CFH and seventh clutch C3 |
| | 7 | Second clutch CF and sixth clutch C4 |
| | 8 | Third clutch CFH and sixth clutch C4 |
| Backward gear | 1 | First clutch CR and fifth clutch C1 |
| | 2 | First clutch CR and fourth clutch |
| | | C2 |
| | 3 | First clutch CR and seventh clutch C3 |
| | 4 | First clutch CR and sixth clutch C4 |

The gearbox in the technical solution of the present invention is of a six-shaft layout. The drive shaft S1, the third intermediate shaft S4 and the fourth intermediate shaft S5 are each provided with two clutch packs, and the first intermediate shaft S2 is provided with one clutch pack. According to such a structure, a transmission path is short, and stability is better. The gear on the drive shaft S1 and the gear on the output shaft S6 can be adjusted in a larger range, so that the achievable speed ratio range can reach 0.6-8.

In conclusion, the modular design gearbox and the gear implementation method of the technical solution of the present invention adopt the form of two clutches on a single shaft. By means of six shafts and seven clutches, the gearbox achieves a mode of up to eight forward gears and four backward gears, the coupling of different clutches can be controlled, so that the mode is adjusted to a seven-forward-gear/three-backward gear mode, a six-forward-gear/three-backward gear mode, a five-forward-gear/three-backward gear mode, and a four-forward-gear/three-backward gear mode to satisfy the requirements of different main engines for different gears. The speed ratio range is wide, and the gearbox can be adjusted flexibly, a less-gear mode can be achieved by reducing some of components, modularization is achieved, universality is improved, and the production cost and use cost of the gearbox are reduced. Moreover, each forward gear is achieved by coupling two clutches and conducting gear engagement four times, each backward gear is achieved by coupling two clutches and conducting gear engagement three times, the transmission path is short, and the reliability is high.

## Claims

1. A modular design gearbox, comprising a body, wherein the modular design gearbox further comprises:
a drive shaft (S1), provided thereon with a first fixed gear (Z2), a first floating gear (Z1) installed through a first clutch (CR), and a second floating gear (Z3) installed through a second clutch (CF);
a first intermediate shaft (S2), provided thereon with a second fixed gear (Z4), a third fixed gear (Z6), and a third floating gear (Z5) installed through a third clutch (CFH), the third fixed gear (Z6) being engaged with the second floating gear (Z3), and the third floating gear (Z5) being engaged with the first fixed gear (Z2);
an second intermediate shaft (S3), provided thereon with a fourth fixed gear (Z7) and a fifth fixed gear (Z8), the fourth fixed gear (Z7) being engaged with the first floating gear (Z1), and the fourth fixed gear (Z7) being engaged with the second fixed gear (Z4);
an third intermediate shaft (S4), provided thereon with a sixth fixed gear (Z11), a fourth floating gear (Z9) installed through a fourth clutch (C2), and a fifth floating gear (Z10) installed through a fifth clutch (C1), the fourth floating gear (Z9) being engaged with the fourth fixed gear (Z7), and the fifth floating gear (Z10) being engaged with the fifth fixed gear (Z8);
an fourth intermediate shaft (S5), provided thereon with a seventh fixed gear (Z14), a sixth floating gear (Z12) installed through a sixth clutch (C4), and a seventh floating gear (Z13) installed through a seventh clutch (C3), the sixth floating gear (Z12) being engaged with the fourth fixed gear (Z7), and the seventh floating gear (Z13) being engaged with the fifth fixed gear (Z8); and
an output shaft (S6), provided thereon with a eighth fixed gear (Z15) and a ninth fixed gear (Z16), the eighth fixed gear (Z15) being engaged with the sixth fixed gear (Z11), and the ninth fixed gear (Z16) being engaged with the seventh fixed gear (Z14);
in a forward gear mode, rotation directions of the drive shaft (S1), the second intermediate shaft (S3), and the output shaft (S6) are the same, and are opposite to rotation directions of the first intermediate shaft (S2), the third intermediate shaft (S4), and the fourth intermediate shaft (S5); and
in a backward gear mode, the rotation directions of the drive shaft (S 1), the third intermediate shaft (S4), and the fourth intermediate shaft (S5) are the same, and are opposite to the rotation directions of the second intermediate shaft (S3) and the output shaft (S6), and the first intermediate shaft (S2) does not participate in transmission;
the gearbox is used to implement a multi-gear mode, wherein the multi-gear mode comprises an eight-forward-gear/four-backward-gear mode;
when the second clutch (CF) is in an engaged state, a first forward path is formed from the second floating gear (Z3) through the third fixed gear (Z6) and the second fixed gear (Z4) to the fourth fixed gear (Z7);
when the third clutch (CFH) is in an engaged state, a second forward path is formed from the first fixed gear (Z2) through the third floating gear (Z5) and the second fixed gear (Z4) to the fourth fixed gear (Z7);
when the fifth clutch (C1) is in an engaged state, a first output path is formed from the fifth fixed gear (Z8) through the fifth floating gear (Z 10) and the sixth fixed gear (Z1 1) to the eighth fixed gear (Z15);
when the fourth clutch (C2) is in an engaged state, a second output path is formed from the fourth floating gear (Z9) through the sixth fixed gear (Z 11) to the eighth fixed gear (Z15);
when the seventh clutch (C3) is in an engaged state, a third output path is formed from the fifth fixed gear (Z8) through the seventh floating gear (Z13) and the seventh fixed gear (Z14) to the ninth fixed gear (Z16);
when the sixth clutch (C4) is in an engaged state, a fourth output path is formed from the sixth floating gear (Z12) through the seventh fixed gear (Z14) to the ninth fixed gear (Z16); and
when the first clutch (CR) is in an engaged state, a backward path is formed from the first floating gear (Z 1) to the fourth fixed gear (Z7);
in the eight-forward-gear/four-backward-gear mode,
a first forward gear: the second clutch (CF) and the fifth clutch (C1) are in an engaged state, and the drive shaft (S 1) transmits power to the output shaft (S6) via the first forward path and the first output path;
a second forward gear: the third clutch (CFH) and the fifth clutch (C1) are in an engaged state, and the drive shaft (S1) transmits power to the output shaft (S6) via the second forward path and the first output path;
a third forward gear: the second clutch (CF) and the fourth clutch (C2) are in an engaged state, and the drive shaft (S1) transmits power to the output shaft (S6) via the first forward path and the second output path;
a fourth forward gear: the third clutch (CFH) and the fourth clutch (C2) are in an engaged state, and the drive shaft (S1) transmits power to the output shaft (S6) via the second forward path and the second output path;
a fifth forward gear: the second clutch (CF) and the seventh clutch (C3) are in an engaged state, and the drive shaft (S1) transmits power to the output shaft (S6) via the first forward path and the third output path;
a sixth forward gear: the third clutch (CFH) and the seventh clutch (C3) are in an engaged state, and the drive shaft (S1) transmits power to the output shaft (S6) via the second forward path and the third output path;
a seventh forward gear: the second clutch (CF) and the sixth clutch (C4) are in an engaged state, and the drive shaft (S1) transmits power to the output shaft (S6) via the first forward path and the fourth output path;
an eighth forward gear: the third clutch (CFH) and the sixth clutch (C4) are in an engaged state, and the drive shaft (S1) transmits power to the output shaft (S6) via the second forward path and the fourth output path;
a first backward gear: the first clutch (CR) and the fifth clutch (C1) are in an engaged state, and the drive shaft (S1) transmits power to the output shaft (S6) via the backward path and the first output path;
a second backward gear: the first clutch (CR) and the fourth clutch (C2) are in an engaged state, and the drive shaft (S1) transmits power to the output shaft (S6) via the backward path and the second output path;
a third backward gear: the first clutch (CR) and the seventh clutch (C3) are in an engaged state, and the drive shaft (S1) transmits power to the output shaft (S6) via the backward path and the third output path; and
a fourth backward gear: the first clutch (CR) and the sixth clutch (C4) are in an engaged state, and the drive shaft (S1) transmits power to the output shaft (S6) via the backward path and the fourth output path;
the gearbox is used to implement a less-gear mode, wherein the less-gear mode comprises a four-forward-gear/four-backward-gear mode;
in the four-forward-gear/four-backward-gear mode, the third clutch (CFH), the third floating gear (Z5) and the first fixed gear (Z2) do not participate in transmission, wherein:
a first forward gear: having a same transmission path as the first forward gear in the eight-forward-gear/four-backward-gear mode;
a second forward gear: having a same transmission path as the third forward gear in the eight-forward-gear/four-backward-gear mode;
a third forward gear: having a same transmission path as the fifth forward gear in the eight-forward-gear/four-backward-gear mode;
a fourth forward gear: having a same transmission path as the seventh forward gear in the eight-forward-gear/four-backward-gear mode;
or in the four-forward-gear/four-backward-gear mode, the second clutch (CF), the second floating gear (Z3) and the third fixed gear (Z6) do not participate in transmission, wherein:
a first forward gear: having a same transmission path as the second forward gear in the eight-forward-gear/four-backward-gear mode;
a second forward gear: having a same transmission path as the fourth forward gear in the eight-forward-gear/four-backward-gear mode;
a third forward gear: having a same transmission path as the sixth forward gear in the eight-forward-gear/four-backward-gear mode;
a fourth forward gear: having a same transmission path as the eighth forward gear in the eight-forward-gear/four-backward-gear mode;
a first backward gear: having a same transmission path as the first backward gear in the eight-forward-gear/four-backward-gear mode;
a second backward gear: having a same transmission path as the second backward gear in the eight-forward-gear/four-backward-gear mode;
a third backward gear: having a same transmission path as the third backward gear in the eight-forward-gear/four-backward-gear mode; and
a fourth backward gear: having a same transmission path as the fourth backward gear in the eight-forward-gear/four-backward-gear mode.

2. The modular design gearbox according to claim 1, wherein a connecting line of projections of a shaft axis of the drive shaft (S 1), a shaft axis of the first intermediate shaft (S2), and a shaft axis of the second intermediate shaft (S3) in a plane perpendicular to the shaft axis of the drive shaft (S 1) is triangular, and a connecting line of projections of the shaft axis of the second intermediate shaft (S3), a shaft axis of the third intermediate shaft (S4), a shaft axis of the fourth intermediate shaft (S5), and a shaft axis of the output shaft (S6) in a plane perpendicular to the shaft axis of the second intermediate shaft (S3) is quadrilateral.

## Patentansprüche

1. Ein modulares Getriebe, umfassend ein Gehäuse, in dem das modulare Getriebe ferner umfasst:
eine Antriebswelle (S1), die mit einem ersten festen Getriebe (Z2), einem ersten schwebenden Getriebe (Z1), das durch eine erste Kupplung (CR) installiert ist, und einem zweiten schwebenden Getriebe (Z3), das durch eine zweite Kupplung (CF) installiert ist, versehen ist;
eine erste Zwischenwelle (S2), die mit einem zweiten festen Getriebe (Z4), einem dritten festen Getriebe (Z6) und einem dritten schwebenden Getriebe (Z5), das durch die dritte Kupplung (CFH) installiert ist, versehen ist, wobei das dritte feste Getriebe (Z6) in das zweite schwebende Getriebe (Z3) und das dritte schwebende Getriebe (Z5) in das erste feste Getriebe (Z2) eingreift;
eine zweite Zwischenwelle (S3), die mit einem vierten festen Getriebe (Z7) und einem fünften festen Getriebe (Z8) versehen ist, wobei das vierte feste Getriebe (Z7) in das erste schwebende Getriebe (Z1) und das vierte feste Getriebe (Z7) in das zweite feste Getriebe (Z4) eingreift;
eine dritte Zwischenwelle (S4), die mit einem sechsten festen Getriebe (Z11), einem vierten schwebenden Getriebe (Z9), die durch eine vierte Kupplung (C2) installiert ist, und ein fünftes schwebendes Getriebe (Z10), das durch eine fünfte Kupplung (C1) installiert ist, versehen ist, wobei das vierte schwebende Getriebe (Z9) in das vierte feste Getriebe (Z7) und das fünfte schwebende Getriebe (Z10) in das fünfte feste Getriebe (Z8) eingreift;
eine vierte Zwischenwelle (S5), die mit einem siebten festen Getriebe (Z14), einem sechsten schwebenden Getriebe (Z12), das durch eine sechste Kupplung (C4) installiert ist, und ein siebtes schwebendes Getriebe (Z13), das durch eine siebte Kupplung (C3) installiert ist, versehen ist, wobei das sechste schwebende Getriebe (Z12) in das vierte feste Getriebe (Z4) und das siebte schwebende Getriebe (Z13) in das fünfte feste Getriebe (Z8) eingreift; und
eine Abtriebswelle (S6), die mit einem achten festen Getriebe (Z15) und einem neunten festen Getriebe (Z16) versehen ist, wobei das achte feste Getriebe (Z15) in das sechste feste Getriebe (Z11) und das neunte feste Getriebe (Z16) in das siebte feste Getriebe (Z14) eingreift;
in einem Vorwärtsgangmodus sind die Drehrichtungen der Antriebswelle (S1), der zweiten Zwischenwelle (S3) und der Abtriebswelle (S6) identisch und sind den Drehrichtungen der ersten Zwischenwelle (S2), der dritten Zwischenwelle (S4) und der vierten Zwischenwelle (S5) entgegengesetzt, und
in einem Rückwärtsgangmodus sind die Drehrichtungen der Antriebswelle (S1), der dritten Zwischenwelle (S4) und der vierten Zwischenwelle (S5) identisch und sind den Drehrichtungen der zweiten Zwischenwelle (S3) und der Abtriebswelle (S6) entgegengesetzt, und die erste Zwischenwelle (2) ist nicht in der Kraftübertragung beteiligt;
das Getriebe wird verwendet, um einen Mehrgangmodus zu implementieren, wobei der Mehrgangmodus acht Vorwärtsgänge und vier Rückwärtsgänge umfasst;
wenn die zweite Kupplung (CF) eingerückt ist, wird ein erster Vorwärtspfad vom zweiten schwebenden Getriebe (Z3) durch das dritte feste Getriebe (Z6) und das zweite feste Getriebe (Z4) bis zum vierten festen Getriebe (Z7) gebildet;
wenn die dritte Kupplung (CFH) eingerückt ist, wird ein zweiter Vorwärtspfad vom ersten festen Getriebe (Z2) durch das dritte feste Getriebe (Z5) und das zweite feste Getriebe (Z4) bis zum vierten festen Getriebe (Z7) gebildet;
wenn die fünfte Kupplung (C1) eingerückt ist, wird ein erster Ausgabepfad vom fünften festen Getriebe (Z8) durch das fünfte schwebende Getriebe (Z10) und das sechste feste Getriebe (Z11) bis zum achten festen Getriebe (Z15) gebildet;
wenn die vierte Kupplung (C2) eingerückt ist, wird ein zweiter Ausgabepfad vom vierten schwebenden Getriebe (Z9) durch das sechste feste Getriebe (Z11) und das echte feste Getriebe (Z15) gebildet;
wenn die siebte Kupplung (C3) eingerückt ist, wird ein dritter Ausgabepfad vom fünften festen Getriebe (Z8) durch das siebte schwebende Getriebe (Z13) und das siebte feste Getriebe (Z14) bis zum neunten festen Getriebe (Z16) gebildet;
wenn die sechste Kupplung (C4) eingerückt ist, wird ein vierter Ausgabepfad vom sechsten schwebenden Getriebe (Z12) durch das siebte feste Getriebe (Z14) bis zum neunten festen Getriebe (Z16) gebildet;
wenn die erste Kupplung (CR) eingerückt ist, wird ein Rückwärtspfad vom ersten schwebenden Getriebe (Z1) bis zum vierten festen Getriebe (Z7) gebildet;
im Modus mit acht Vorwärtsgang- und vier Rückwärtsgängen:
erster Vorwärtsgang; die zweite Kupplung (CF) und die fünfte Kupplung (C1) sind eingerückt, und die Antriebswelle (S1) übertragt die Kraft zur Abtriebswelle (S6) über den ersten Vorwärtspfad und den ersten Ausgabepfad;
zweiter Vorwärtsgang: die dritte Kupplung (CFH) und die fünfte Kupplung (C1) sind eingerückt, und die Antriebswelle (S1) übertragt die Kraft zur Abtriebswelle (S6) über den zweiten Vorwärtspfad und den ersten Ausgabepfad;
dritter Vorwärtsgang: die zweite Kupplung (CF) und die vierte Kupplung (C2) sind eingerückt, und die Antriebswelle (S1) übertragt die Kraft zur Abtriebswelle (S6) über den ersten Vorwärtspfad und den zweiten Ausgabepfad;
vierter Vorwärtsgang: die dritte Kupplung (CFH) und die vierte Kupplung (C2) sind eingerückt, und die Antriebswelle (S1) übertragt die Kraft zur Abtriebswelle (S6) über den zweiten Vorwärtspfad und den zweiten Ausgabepfad;
fünfter Vorwärtsgang: die zweite Kupplung (CF) und die siebte Kupplung (C3) sind eingerückt, und die Antriebswelle (S1) übertragt die Kraft zur Abtriebswelle (S6) über den ersten Vorwärtspfad und den dritten Ausgabepfad;
sechster Vorwärtsgang: die dritte Kupplung (CFH) und die siebte Kupplung (C3) sind eingerückt, und die Antriebswelle (S1) übertragt die Kraft zur Abtriebswelle (S6) über den zweiten Vorwärtspfad und den dritten Ausgabepfad;
siebter Vorwärtsgang: die zweite Kupplung (CF) und die sechste Kupplung (C4) sind eingerückt, und die Antriebswelle (S1) übertragt die Kraft zur Abtriebswelle (S6) über den ersten Vorwärtspfad und den vierten Ausgabepfad;
achter Vorwärtsgang: die dritte Kupplung (CFH) und die sechste Kupplung (C4) sind eingerückt, und die Antriebswelle (S1) übertragt die Kraft zur Abtriebswelle (S6) über den zweiten Vorwärtspfad und den vierten Ausgabepfad;
erster Rückwärtsgang: die erste Kupplung (CR) und die fünfte Kupplung (C1) sind eingerückt, und die Antriebswelle (S1) übertragt die Kraft zur Abtriebswelle (S6) über den Rückwärtspfad und den ersten Ausgabepfad;
zweiter Rückwärtsgang: die erste Kupplung (CR) und die vierte Kupplung (C2) sind eingerückt, und die Antriebswelle (S1) übertragt die Kraft zur Abtriebswelle (S6) über den Rückwärtspfad und den zweiten Ausgabepfad;
dritter Rückwärtsgang: die erste Kupplung (CR) und die siebte Kupplung (C3) sind eingerückt, und die Antriebswelle (S1) übertragt die Kraft zur Abtriebswelle (S6) über den Rückwärtspfad und den dritten Ausgabepfad; und
vierter Rückwärtsgang: die erste Kupplung (CR) und die sechste Kupplung (C4) sind eingerückt, und die Antriebswelle (S1) übertragt die Kraft zur Abtriebswelle (S6) über den Rückwärtspfad und den vierten Ausgabepfad;
das Getriebe wird verwendet, um einen Modus mit weniger Gängen zu implementieren, wobei dieser Modus mit weniger Gängen vier Vorwärts- und vier Rückwärtsgänge umfasst;
im Modus mit vier Vorwärts- und vier Rückwärtsgängen, sind die dritte Kupplung (CFH), das dritte schwebende Getriebe (Z5) und das erste feste Getriebe (Z2) nicht an der Kraftübertragung beteiligt; dabei sind die Gänge wie folgt:
erster Vorwärtsgang; mit demselben Übertragungspfad wie der erste Vorwärtsgang im Modus mit acht Vorwärts- und vier Rückwärtsgängen;
zweiter Vorwärtsgang: mit demselben Übertragungspfad wie der dritte Vorwärtsgang im Modus mit acht Vorwärts- und vier Rückwärtsgängen;
dritter Vorwärtsgang: mit demselben Übertragungspfad wie der fünfte Vorwärtsgang im Modus mit acht Vorwärts- und vier Rückwärtsgängen;
vierter Vorwärtsgang: mit demselben Übertragungspfad wie der siebte Vorwärtsgang im Modus mit acht Vorwärts- und vier Rückwärtsgängen;
im Modus mit vier Vorwärts- und vier Rückwärtsgängen, sind die zweite Kupplung (CF), das zweite schwebende Getriebe (Z3) und das dritte feste Getriebe (Z6) nicht an der Kraftübertragung beteiligt; dabei sind die Gänge wie folgt:
erster Vorwärtsgang; mit demselben Übertragungspfad wie der zweite Vorwärtsgang im Modus mit acht Vorwärts- und vier Rückwärtsgängen;
zweiter Vorwärtsgang: mit demselben Übertragungspfad wie der vierte Vorwärtsgang im Modus mit acht Vorwärts- und vier Rückwärtsgängen;
dritter Vorwärtsgang: mit demselben Übertragungspfad wie der sechste Vorwärtsgang im Modus mit acht Vorwärts- und vier Rückwärtsgängen;
vierter Vorwärtsgang: mit demselben Übertragungspfad wie der achte Vorwärtsgang im Modus mit acht Vorwärts- und vier Rückwärtsgängen;
erster Rückwärtsgang: mit demselben Übertragungspfad wie der erste Rückwärtsgang im Modus mit acht Vorwärts- und vier Rückwärtsgängen
zweiter Rückwärtsgang: mit demselben Übertragungspfad wie der zweite Rückwärtsgang im Modus mit acht Vorwärts- und vier Rückwärtsgängen
dritter Rückwärtsgang: mit demselben Übertragungspfad wie der dritte Rückwärtsgang im Modus mit acht Vorwärts- und vier Rückwärtsgängen
vierter Rückwärtsgang: mit demselben Übertragungspfad wie der vierte Rückwärtsgang im Modus mit acht Vorwärts- und vier Rückwärtsgängen

2. Das modulare Getriebe nach Anspruch 1, wobei eine Verbindungslinie von Projektionen einer Wellenachse der Antriebswelle (S1), einer Wellenachse der ersten Zwischenwelle (S2) und einer Wellenachse der zweiten Zwischenwelle (S3) in einer Ebene, die senkrecht zur Wellenachse der Antriebswelle (S1) verläuft, ein Dreieck bildet, und eine Verbindungslinie von Projektionen einer Wellenachse der zweiten Zwischenwelle (S3), einer Wellenachse der dritten Zwischenwelle (S4), einer Wellenachse der vierten Zwischenwelle (S5) und einer Wellenachse der Abtriebswelle (S6) in einer Ebene, die senkrecht zur Wellenachse der zweiten Zwischenwelle (S3) verläuft, ein Viereck bildet.

## Revendications

1. Une boîte de vitesse à conception modulaire, comprenant un corps, dans lequel la boîte de vitesse à conception modulaire comprend en outre :
un arbre d'entraînement (S1), muni d'un premier engrenage fixe (Z2), d'un premier engrenage flottant (Z1) installé à travers un premier embrayage (CR), et d'un deuxième engrenage flottant (Z3) installé via un deuxième embrayage (CF) ;
un premier arbre intermédiaire (S2), muni d'un deuxième engrenage fixe (Z4), un troisième engrenage fixe (Z6), et un troisième engrenage flottant (Z5) installés à travers un troisième embrayage (CFH), le troisième engrenage fixe (Z6) étant engagé avec le deuxième engrenage flottant (Z3), et le troisième engrenage flottant (Z5) étant engagé avec le premier engrenage fixe (Z2) ;
un deuxième arbre intermédiaire (S3), muni d'un quatrième engrenage fixe (Z7) et un cinquième engrenage fixe (Z8), le quatrième engrenage fixe (Z7) étant engagé avec le premier engrenage flottant (Z1), et le quatrième engrenage fixe (Z7) étant engagé avec deuxième engrenage fixe (Z4) ;
un troisième arbre intermédiaire (S4), muni d'un sixième engrenage fixe (Z11), d'un quatrième engrenage flottant (Z9) installé à travers un quatrième embrayage (C2), et d'un cinquième engrenage flottant (Z10) installé à travers un cinquième embrayage (C1), le quatrième engrenage flottant (Z9) étant engagé avec le quatrième engrenage fixe (Z7), et le cinquième engrenage flottant (Z10) étant engagé avec le cinquième engrenage fixe (Z8) ;
un quatrième arbre intermédiaire (S5), muni d'un septième engrenage fixe (Z14), d'un sixième engrenage flottant (Z12) installé à travers un sixième embrayage (C4), et d'un septième engrenage flottant (Z13) installé à travers un septième embrayage (C3), le sixième engrenage flottant (Z12) étant engagé avec le quatrième engrenage fixe (Z7), et le septième engrenage flottant (Z13) étant engagé avec le cinquième engrenage fixe (Z8) ; et
un arbre de sortie (S6), muni d'un huitième engrenage fixe (Z15) et d'un neuvième engrenage fixe (Z16), le huitième engrenage fixe (Z15) étant engagé avec le sixième engrenage fixe (Z11), et le neuvième engrenage fixe (Z16) étant engagé avec le septième engrenage fixe (Z14) ;
en mode marche avant, les sens de rotation de l'arbre d'entraînement (S1), du deuxième arbre intermédiaire (S3), et de l'arbre de sortie (S6) sont identiques, et sont opposés au sens de rotation du premier arbre intermédiaire (S2), du troisième arbre intermédiaire (S4), et du quatrième arbre intermédiaire (S5) ; et
en mode marche arrière, les sens de rotation de l'arbre d'entraînement (S1), du troisième arbre intermédiaire (S4), et du quatrième arbre intermédiaire (S5) sont identiques, et sont opposés au sens de rotation du deuxième arbre intermédiaire (S3) et de l'arbre de sortie (S6), et le premier arbre intermédiaire (S2) ne participe pas à la transmission ;
la boîte de vitesse est utilisée pour mettre en oeuvre un mode à vitesses multiples, dans lequel le mode à vitesses multiples comprend un mode huit marches avant/quatre marches arrière ;
lorsque le deuxième embrayage (CF) est en mode engagé, un premier chemin avant est formé depuis le deuxième engrenage flottant (Z3) via le troisième engrenage fixe (Z6) et le deuxième engrenage fixe (Z4) jusqu'au quatrième engrenage fixe (Z7) ;
lorsque le troisième embrayage (CFH) est en mode engagé, un deuxième chemin avant est formé depuis le premier engrenage fixe (Z2) via le troisième engrenage fixe (Z5) et le deuxième engrenage fixe (Z4) jusqu'au quatrième engrenage fixe (Z7) ;
lorsque le cinquième embrayage (C1) est en mode engagé, un premier chemin de sortie est formé depuis le cinquième engrenage fixe (Z8) via le cinquième engrenage flottant (Z10) et le sixième engrenage fixe (Z11) jusqu'au septième engrenage fixe (Z15) ;
lorsque le quatrième embrayage (C2) est en mode engagé, un deuxième chemin de sortie est formé depuis le quatrième engrenage flottant (Z9) via le sixième engrenage fixe (Z11) jusqu'au huitième engrenage fixe (Z15) ;
lorsque le septième embrayage (C3) est en mode engagé, un troisième chemin de sortie est formé depuis le cinquième engrenage fixe (Z8) via le septième engrenage flottant (Z13) et le septième engrenage fixe (Z14) jusqu'au neuvième engrenage fixe (Z16) ;
lorsque le sixième embrayage (C4) est en mode engagé, un quatrième chemin de sortie est formé depuis le sixième engrenage flottant (Z12) via le septième engrenage fixe (Z14) jusqu'au neuvième engrenage fixe (Z16) ; et
lorsque le premier embrayage (CR) est en mode engagé, un chemin arrière est formé depuis le premier engrenage flottant (Z1) jusqu'au quatrième engrenage fixe (Z7) ;
dans le mode huit marches avant/quatre marches arrière,
une première marche avant : le deuxième embrayage (CF) et le cinquième embrayage (C1) sont en état engagé, et l'arbre d'entraînement (S1) transmet la puissance à l'arbre de sortie (S6) via le premier chemin avant et le premier chemin de sortie ;
une deuxième marche avant : le troisième embrayage (CFH) et le cinquième embrayage (C1) sont en état engagé, et l'arbre d'entraînement (S1) transmet la puissance à l'arbre de sortie (S6) via le deuxième chemin avant et le premier chemin de sortie ;
une troisième marche avant : le deuxième embrayage (CF) et le quatrième embrayage (C2) sont en état engagé, et l'arbre d'entraînement (S1) transmet la puissance à l'arbre de sortie (S6) via le premier chemin avant et le deuxième chemin de sortie ;
une quatrième marche avant : le troisième embrayage (CFH) et le quatrième embrayage (C2) sont en état engagé, et l'arbre d'entraînement (S1) transmet la puissance à l'arbre de sortie (S6) via le deuxième chemin avant et le deuxième chemin de sortie ;
une cinquième marche avant : le deuxième embrayage (CF) et le septième embrayage (C3) sont en état engagé, et l'arbre d'entraînement (S1) transmet la puissance à l'arbre de sortie (S6) via le premier chemin avant et le troisième chemin de sortie ;
une sixième marche avant : le troisième embrayage (CFH) et le septième embrayage (C3) sont en état engagé, et l'arbre d'entraînement (S1) transmet la puissance à l'arbre de sortie (S6) via le deuxième chemin avant et le troisième chemin de sortie ;
une septième marche avant : le deuxième embrayage (CF) et le sixième embrayage (C4) sont en état engagé, et l'arbre d'entraînement (S1) transmet la puissance à l'arbre de sortie (S6) via le premier chemin avant et le quatrième chemin de sortie ;
une huitième marche avant : le troisième embrayage (CFH) et le sixième embrayage (C4) sont en état engagé, et l'arbre d'entraînement (S1) transmet la puissance à l'arbre de sortie (S6) via le deuxième chemin avant et le quatrième chemin de sortie ;
une première marche arrière : le premier embrayage (CR) et le cinquième embrayage (C1) sont en état engagé, et l'arbre d'entraînement (S1) transmet la puissance à l'arbre de sortie (S6) via le chemin arrière et le premier chemin de sortie ;
une deuxième marche arrière : le premier embrayage (CR) et le quatrième embrayage (C2) sont en état engagé, et l'arbre d'entraînement (S1) transmet la puissance à l'arbre de sortie (S6) via le chemin arrière et le deuxième chemin de sortie ;
une troisième marche arrière : le premier embrayage (CR) et le septième embrayage (C3) sont en état engagé, et l'arbre d'entraînement (S1) transmet la puissance à l'arbre de sortie (S6) via le chemin arrière et le troisième chemin de sortie ; et
une quatrième marche arrière : le premier embrayage (CR) et le sixième embrayage (C4) sont en état engagé, et l'arbre d'entraînement (S1) transmet la puissance à l'arbre de sortie (S6) via le chemin arrière et le quatrième chemin de sortie ;
la boîte de vitesse est utilisée pour mettre en oeuvre un mode à moindre engrenage, dans lequel le mode à moindre engrenage comprend un mode à quatre marches avant/quatre marches arrière ;
dans le mode à quatre marches avant/quatre marches arrière, le troisième embrayage (CFH), le troisième engrenage flottant (Z5) et le premier engrenage fixe (Z2) ne participent pas en transmission, dans lequel :
une première marche avant : dotée du même chemin de transmission que la première marche avant dans le mode à huit marches avant/quatre marches arrière ;
une deuxième marche avant : dotée du même chemin de transmission que la troisième marche avant dans le mode à huit marches avant/quatre marches arrière ;
une troisième marche avant : dotée du même chemin de transmission que la cinquième marche avant dans le mode à huit marches avant/quatre marches arrière ;
une quatrième marche avant : dotée du même chemin de transmission que la septième marche avant dans le mode à huit marches avant/quatre marches arrière ;
ou dans le mode quatre marches avant/quatre marches arrière, le deuxième embrayage (CF), le deuxième engrenage flottant (Z3) et le troisième engrenage fixe (Z6) ne participent pas en transmission, dans lequel :
une première marche avant : dotée du même chemin de transmission que la deuxième marche avant dans le mode à huit marches avant/quatre marches arrière ;
une deuxième marche avant : dotée du même chemin de transmission que la quatrième marche avant dans le mode à huit marches avant/quatre marches arrière ;
une troisième marche avant : dotée du même chemin de transmission que la sixième marche avant dans le mode à huit marches avant/quatre marches arrière ;
une quatrième marche avant : dotée du même chemin de transmission que la huitième marche avant dans le mode à huit marches avant/quatre marches arrière ;
une première marche arrière : dotée du même chemin de transmission que la première marche arrière dans le mode à huit marches avant/quatre marches arrière ;
une deuxième marche arrière : dotée du même chemin de transmission que la deuxième marche arrière dans le mode à huit marches avant/quatre marches arrière ;
une troisième marche arrière : dotée du même chemin de transmission que la troisième marche arrière dans le mode à huit marches avant/quatre marches arrière ;
une quatrième marche arrière : dotée du même chemin de transmission que la quatrième marche arrière dans le mode à huit marches avant/quatre marches arrière ;

2. Une boîte de vitesse à conception modulaire selon la revendication 1, dans laquelle la ligne de raccordement des projections de l'axe d'arbre de l'arbre d'entraînement (S1), de l'axe d'arbre du premier arbre intermédiaire (S2), et de l'axe d'arbre du deuxième arbre intermédiaire (S3) dans un plan perpendiculaire à l'axe d'arbre de l'arbre d'entraînement (S1) est triangulaire, et la ligne de raccordement des projections de l'axe d'arbre du deuxième arbre intermédiaire (S3), de l'axe d'arbre du troisième arbre intermédiaire (S4), l'axe d'arbre du cinquième arbre intermédiaire (S5), et l'axe d'arbre de l'arbre de sortie (S6) dans un plan perpendiculaire à l'axe d'arbre deuxième arbre intermédiaire (S3) est quadrilatéral.
